# EUROPEAN PATENT SPECIFICATION

(11) **EP 1 729 902 B1**
(45) Date of publication and mention of the grant of the patent: **17.02.2010**
(21) Application number: 05714300.0
(22) Date of filing: 24.03.2005
(51) Int. Cl.: B21G 1/00, B21G 1/08, B24B 19/16, G02B 23/16, B24B 41/06

(54) **DRIVE**
ANTRIEB
MECANISME D'ENTRAINEMENT

(30) Priority: 31.03.2004 AU 2004901717
(43) Date of publication of application: 13.12.2006
(73) Proprietor: Eastland Medical Systems Ltd, West Perth, Western Australia 6005 (AU)
(72) Inventor: BUNCE, Philip, Portland, Victoria 3305 (AU)
(74) Representative: Haley, Stephen
(86) International application number: PCT/AU2005/000429
(87) International publication number: WO 2005/095017

(56) References cited:
- EP-A1- 0 563 410
- EP-B1- 0 650 697
- DE-A1- 2 812 463
- DE-A1- 2 845 825
- DE-U- 6 607 122
- US-A- 3 159 084
- US-A- 5 282 715
- DATABASE WPI Week 199233, 30 June 1992 Derwent Publications Ltd., London, GB; Class P52, AN 1992-269053, XP008093145 & BR 9 005 255 A (IMT INST MAUA TECNOLOGIA)

## Description

### Field of the Invention

This invention relates to a drive.

### Background

The invention relates to a drive which is able to effect a controlled movement between two elements.

A particular application of the drive of the invention relates to a drive which can be utilised in the machining of needles utilising a rotary jig of the form disclosed in WO 2004-065036. In machining of needles which are utilised in hypodermic syringes the rotary jig of the abovementioned application is mounted to a drive head which is capable of causing rotation of the jig about its central axis and which is also capable of causing relative rotation movement between inner and outer clamping surfaces provided by the jig. Because of the dimensions of the needles the degree of rotational movement between the clamping surfaces is very limited and needs to be very accurately controlled with minimal or no lash.

In addition there are other circumstances which arise in which an item supported from a base supporting structure where the item needs to be capable of general but when at a particular position must also be capable of accurate controlled movement. A particular application of this arrangement relates to mounting of a telescope where it becomes necessary to cause the telescope to move about an axis in order that the telescope can be directed and track a celestial object but there must also be very controlled calibrated movement of the telescope upon the support structure in order to accurately position the telescope. A similar arrangement relates to tracking arrangements used for targeting of weaponry such as missiles at a target.

EP-A1-0563410 discloses a device for self-adjusting axial backlash of a motor shaft by means of a wedge slide system.

Accordingly the invention resides in a drive enabling controlled relative movement between two members according to claim 1.

The invention will be more fully understood in the light of the following description of several specific embodiments.

### Brief Description of the Drawings

The description is made with reference to the accompanying drawings of which:
Figure 1 is an isometric view of a drive according to the first embodiment;
Figure 2 is an exploded view of a drive according to the first embodiment;
Figure 3 is a part sectional view of the bearing arrangement between the drive member and the other member according to the first embodiment;
Figure 4 is a sectional view of a drive according to the first embodiment;
Figure 5 is an exploded view of a drive according to the second embodiment;
Figure 6 is an exploded view of a drive according to the third embodiment.

### Detailed Description of Specific Embodiments

Each of the embodiments are directed to a drive which can be utilised in association with a rotary jig of the form disclosed as the first embodiment of the invention of international application PCT/AU2004/000090. Each of the embodiments provide a drive whereby the outer portion of the jig is caused to rotate about a central axis and the central portion of the jig together with the shoes which support the needle blanks is capable of relative rotation about the same central axis relative to the outer portion as well as rotation with the outer portion about the central axis. This controlled movement of the central portion relative to the outer portion must be effected accurately and without any lash and relates to a very small degree of movement which is required to effect the desired rotation of the needle blanks supported between the central and outer portions.

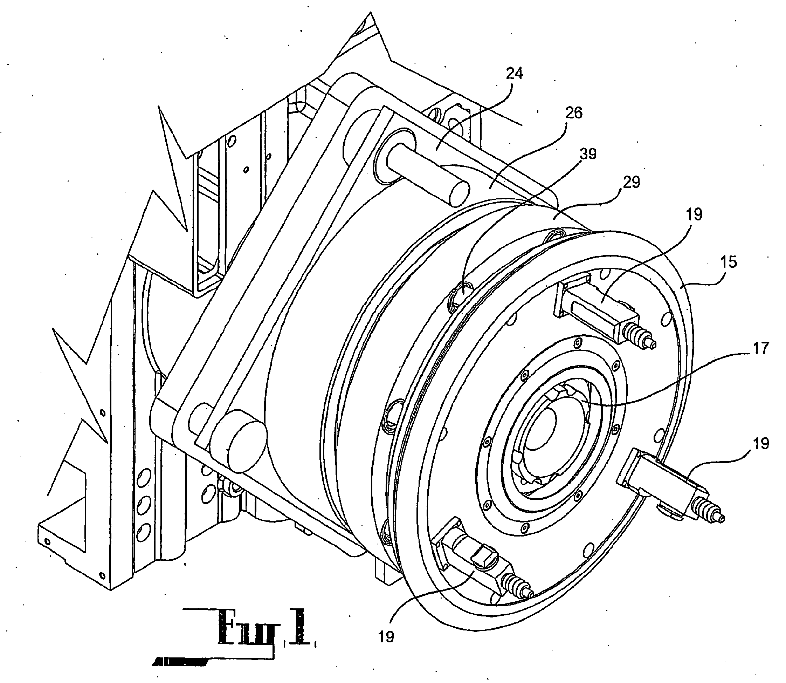

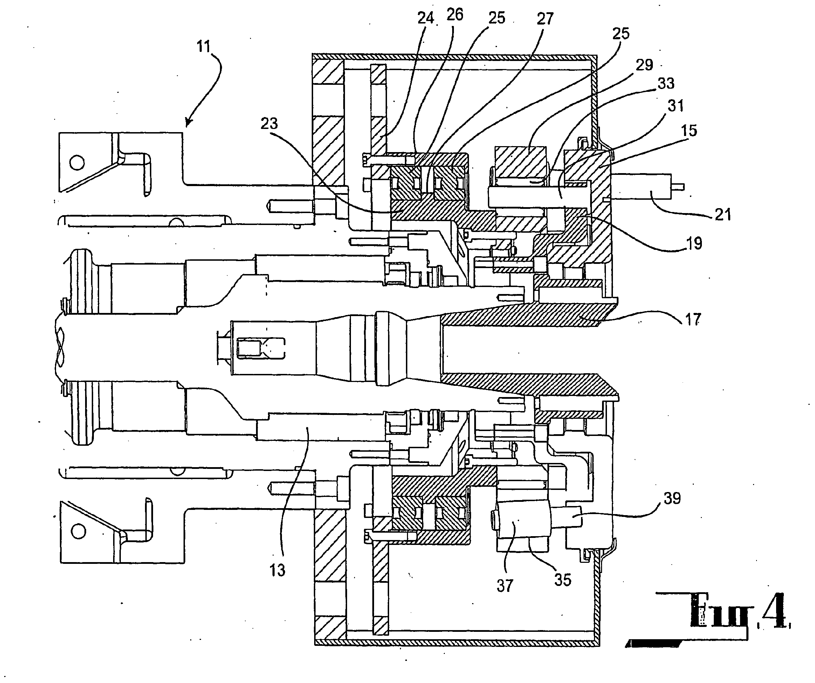

The first embodiment as shown at Figures 1, 2, 3 and 4 comprises a drive which comprises a drive head 11 having a drive shaft 13 connected to a suitable drive to effect rotation of the drive shaft 13 about its outer most axis. The drive head 11 is provided with a chuck 17 supported from one end of a drive shaft 13 for rotation with the drive shaft. The chuck 17 is provided with a hub 19 which extends radially from the chuck 17. The drive head further comprises a supports a support plate 15 a the support plate 15 which is rotatably supported from the hub 19 for rotation about a central axis of the chuck 17.

The support plate is provided with a set of axially directed equiangular spaced pegs 21 which are to support the jig (not shown). In use the jig is supported from the drive head by being engaged with both the chuck 17 and the pegs 21 of the support plate 15 whereby the shoes and their support are supported from the pegs 21 while the outer portion of the jig which provides the outer clamping surface is supported from the chuck 17.

The drive shaft is associated with a drive assembly which rotates with the drive shaft 17 and which includes an annular bearing block 23 which is supported to be slidable axially upon the drive shaft towards and away from the hub 19. The bearing block is associated with a back plate 24 which is fixed rotationally with respect to a drive shaft and which is further moveable axially with the bearing block 23. The back plate connected to the bearing block 23 through a pair of axially spaced thrust bearings 25 received between the bearing block and a skirt supported on the back plate. The outer radial face of the bearing block 23 is formed with a central rib 27 which is received between the thrust bearings 25. The back plate 24 is associated with an extension means such as a fluid operated cylinder or like mechanical means which is supported from the drive head 11 whereby extension and retraction of the extension means (instead of hydraulic cylinder) causes axial movement of the back plate 24 and thus the bearing block 23 on the drive shaft.

The drive further comprises a bearing plate 29 which is rotatable with the drive shaft and is supported from the bearing block 23 to be moveable axially with the bearing block 23. The bearing plate is connected to the hub 19 through a set of first rods 31 which are supported at one end from the hub 19 and are receivable through linear bearings 33 in the bearing plate 29. The central axes of the linear bearings are parallel to the central axis. As a result of axial movement of the bearing block 23, the bearing plate 29 is caused to move axially and will slide along the first rods 31. As a result the hub 19 will rotate with the drive shaft.

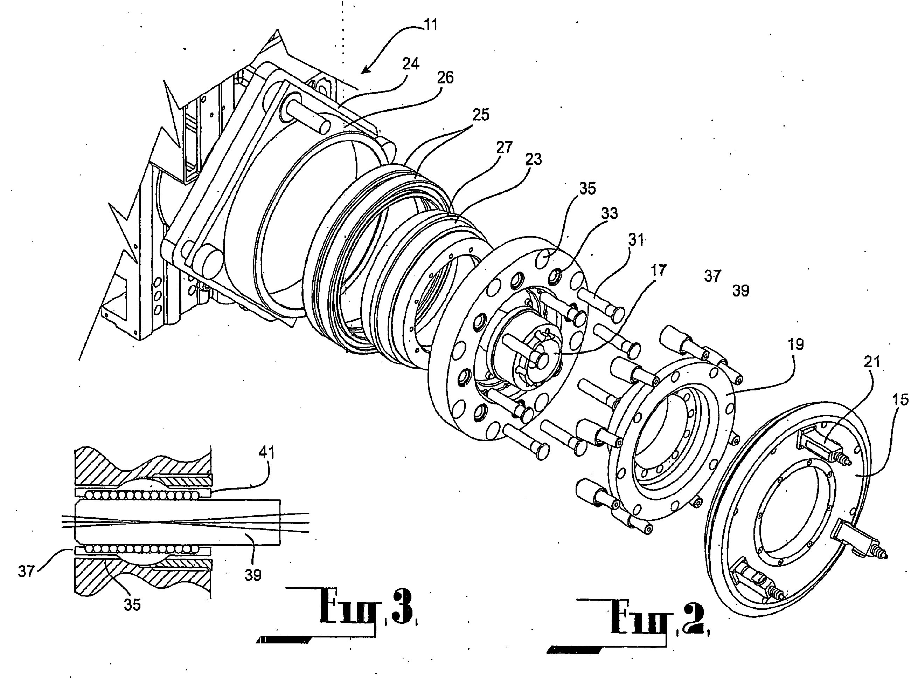

In addition the bearing plate 29 is provided with a set of bores 35 the central axes of which angularly offset from the central axis of the chuck 17 and which accommodate linear bearings 37 (see Figure 3). In addition the support plate 15 supports a set of second rods 39 where the angular orientation of the central axes of the second rods correspond with the angular orientation of the bores 35 The second rods are slidably are received in the linear bearings 37 which each comprise a tubular member 41 which is pivotally supported in the bores 35 to accommodate for the relative displacement between the rods 39 and the central axis of the respective bore 35 with axial displacement of the bearing plate 29 relative to the support plate 15.

With axial movement of the bearing plate 25 relative to the support plate 15 there will be controlled relative rotational movement of the support plate with respect to the bearing plate 29 and thus to the hub 19. The degree of relative rotation between the support plate 15 and the hub 19 is controlled due to the close alignment of the second rods 39 within the linear bearings 37 and is limited. As a result the relative movement between the portions of the jig are closely and accurately controlled. This is required for the adequate machining of needle blanks.

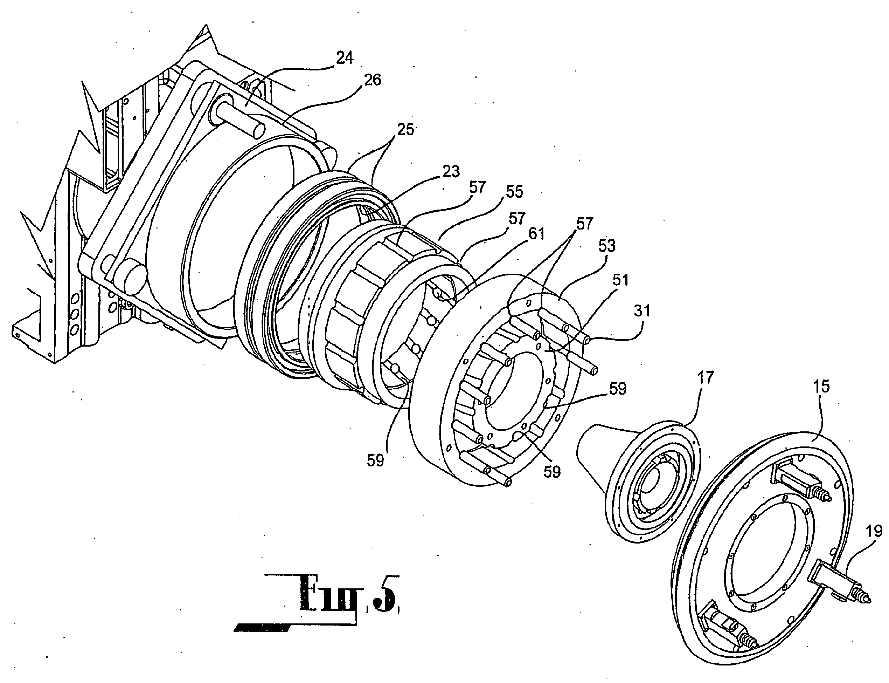

In the case of the second embodiment as shown at Figure 5 the components corresponding with components of the first embodiment have been given the same reference numerals. In the case of the second embodiment the bearing plate 29 of the first embodiment is replaced by an inner ring 51 and an outer ring 53 which are concentrically supported upon the drive shaft assembly with an intermediate ring 55 located therebetween. The inner ring 51 rotates with the drive shaft and the bearing block 23 bears on the innermost axial face of the intermediate ring 55 whereby the intermediate ring 55 is slidably axially relative to the inner and outer rings 51 and 53. The opposed radial faces of the outer ring 53 and intermediate ring 55 are provided with a set of elongate grooves which are parallel to the central axis of the drive shaft and which are associated with a set of first rods 31, which are slidably received through the first set of grooves 57 provided on the opposed faces of the outer and intermediate ring 53 and 55. Therefore as a result of axial movement of the bearing block 23 the intermediate ring 55 is displaced axially and moves axially through the outer ring 53 without causing any rotational displacement of the support plate 15 relative to the drive shaft.

The opposed radial faces of the inner ring 51 and an intermediate ring 55 are also provided with a set of second grooves 59 which when aligned form a passage of circular cross section therebetween. The central axes grooves however are displaced angularly from the axis of the grooves 57 between the outer ring 53 and the intermediate ring 55. The second grooves 59 support between themselves a single ball having a cross sectional configuration corresponding to the cross sectional configuration of the second grooves 59 when aligned. The axial displacement of the bearing block 53 causes axial displacement of the intermediate ring 55 relative to the inner ring and as a result the second grooves 59 of the inner and intermediate ring 53 and 55 move relative to each other from a position at the mid-position which they are substantially aligned and a position to either side of the mid position at which the grooves are not aligned. However, the presence of the ball 59 between the grooves requires that the ball be located at the intersection of the second grooves 59 and as a result of it being resident at that point of intersection the inner ring 51 is caused to rotate relative to the outer ring 53. Because of the very close tolerance between the ball 61 and the locus of intersection of the second grooves 59, the degree of relative movement between the inner ring 51 and the outer ring 53 is closely controlled.

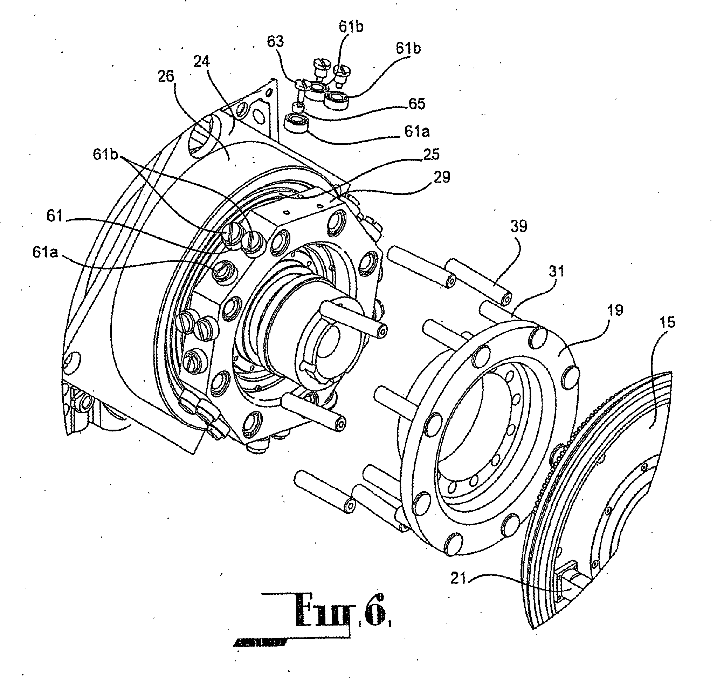

In the case of the third embodiment as shown at Figure 6 the components corresponding with components of the first and second embodiment have been given the same reference numerals. The third embodiment is a variation from the first embodiment whereby the off centre bores 35 which receive the second rods 39 and the associated linear bearings 37 are replaced by a guide provided on the outer face of the bearing plate 29. The bearing plate 29 is polygonal and the faces of the bearing plate 29 are in one-two-one correspondence with the second rods 39 which are in tum supported from the support plate 15. Each of the guides comprises a set of bearings 61 fixed to each face of the bearing plate 29 and which define between themselves a passageway having a transverse dimension corresponding to that of the second rods 39. The bearings are located such that two 61b are located to one side of the passage and one 61a is located to the other side. The one bearing 61a is supported from the face by a stud and an eccentric bush 65 whereby with rotation of the eccentric bush 65 about the stud 23 the spacing of the one bearing 61a relative to the other bearings 61b can be adjusted.

The scope of the present invention is defined by the appended claims.

## Claims

1. A drive enabling controlled relative movement between two members (19, 15), said one member (19) being supported from the other member (15) for relative movement between the two members (19, 15), concentrically about a first axis, **characterised in that** a drive member (39, 55) is received between the two members (19, 15), the drive member (39, 55) being capable of movement relative to said two members along a second axis which is traverse to the path of said relative movement between the members and parallel to the first axis, the drive member (39, 55) being movable with the one member along the path of the relative movement, the drive member being engaged with the other member (15) and cooperating with the other member (15) whereby with movement of the drive member (39, 55) along the second axis the two members (19, 15) are subjected to said relative movement.

2. A drive as claimed at claim 1 wherein the drive comprises a plurality of drive members (39).

3. A drive as claimed at claim 1 or 2 wherein the drive member (39) is elongate, the central axis of the drive member (39) being parallel to a third axis which is angularly offset from the second axis, the drive member (39) being received in a passage (35) in the other member (15).

4. A drive as claimed at claim 3 wherein the passage (35) is provided by an element (41) which is pivotally supported from the other member (15).

5. A drive as claimed at claim 2 or 3 or 4 wherein the drive includes an annular bearing plate (29) displaceable along the second axis, a drive means configured and arranged to cause said displacement, the drive member (39, 55) being supported from the bearing plate (29).

6. A drive as claimed at claim 5 or wherein the bearing plate (29) supports at least one rod which is received in at least one passageway provided in the one member (19), the central axes of the passageways being parallel to the first axis.

7. A drive as claimed at claim any one of claims 5 or 6 wherein the bearing plate (29) is associated with a back plate (24) which is incapable of rotation but is capable of axial movement parallel to the second axis, a thrust bearing provided between the back plate (24) and the bearing plate (29), a drive means associated with the back plate (24) to cause said movement of the bearing plate (29).

8. A drive as claimed at claim 1 wherein the opposed faces of the drive member (55) and the other member (15) are formed with a pair of opposed grooves which can cooperate when aligned to define an elongate passage of circular cross-section, said the central axis of the passage being parallel to a third axis which is angularly offset from the second axis, the passage supporting a ball member conforming to the cross-sectional dimensions of the passage.

## Patentansprüche

1. Antrieb, der eine gesteuerte Relativbewegung zwischen zwei Elementen (19, 15) ermöglicht, wobei das eine Element (19) vom anderen Element (15) für eine Relativbewegung zwischen den beiden Elementen (19, 15) konzentrisch um eine erste Achse getragen wird, **dadurch gekennzeichnet, dass** ein Antriebselement (39, 55) zwischen den beiden Elementen (19, 15) aufgenommen ist, das Antriebselement (39, 55) in der Lage ist, sich relativ zu den beiden Elementen entlang einer zweiten Achse zu bewegen, die quer zum Weg der Relativbewegung zwischen den Elementen und parallel zur ersten Achse verläuft, das Antriebselement (39, 55) mit dem einen Element entlang des Weges der Relativbewegung bewegt werden kann und das Antriebselement mit dem anderen Element (15) in Eingriff steht und mit dem anderen Element (15) zusammenwirkt, wodurch bei einer Bewegung des Antriebselementes (39, 55) entlang der zweiten Achse die beiden Elemente (19, 15) der Relativbewegung ausgesetzt sind.

2. Antrieb nach Anspruch 1, wobei der Antrieb eine Vielzahl von Antriebselementen (39) enthält.

3. Antrieb nach Anspruch 1 oder 2, wobei das Antriebselement (39) länglich ist, die zentrale Achse des Antriebselementes (39) parallel zu einer dritten Achse verläuft, die von der zweiten Achse winkelig versetzt ist, und das Antriebselement (39) in einem Durchgang (35) im anderen Element (15) aufgenommen ist.

4. Antrieb nach Anspruch 3, bei dem der Durchgang (35) durch ein Element (41) vorgesehen ist, das schwenkbar von dem anderen Element (15) gehalten ist.

5. Antrieb nach Anspruch 2 oder 3 oder 4, wobei der Antrieb eine ringförmige Lagerplatte (29) enthält, die entlang der zweiten Achse verschoben werden kann, eine Antriebseinrichtung so beschaffen und angeordnet ist, dass sie diese Verschiebung verursacht, und das Antriebselement (39, 55) von der Lagerplatte (29) getragen ist.

6. Antrieb nach Anspruch 5, bei dem die Lagerplatte (29) wenigstens eine Welle hält, die in wenigstens einem Durchgangsweg aufgenommen ist, der in dem einen Element (19) vorgesehen ist, wobei die zentralen Achsen der Durchgangswege parallel zur ersten Achse sind.

7. Antrieb nach einem der Ansprüche 5 oder 6, bei dem die Lagerplatte (29) mit einer Stützplatte (24) verbunden ist, die sich nicht drehen kann, jedoch in der Lage ist, sich axial parallel zur zweiten Achse zu bewegen, ein Drucklager zwischen der Stützplatte (24) und der Lagerplatte (29) vorgesehen ist und eine Antriebseinrichtung mit der Stützplatte (24) verbunden ist, um die Bewegung der Lagerplatte (29) zu verursachen.

8. Antrieb nach Anspruch 1, bei dem die gegenüberliegenden Flächen des Antriebselementes (55) und des anderen Elementes (15) mit zwei gegenüberliegenden Rillen versehen sind, die zusammenwirken können, wenn sie ausgerichtet sind, um einen länglichen Durchgang eines kreisförmigen Querschnittes zu bilden, wobei die zentrale Achse des Durchgangs parallel zu einer dritten Achse verläuft, die von der zweiten Achse winkelig versetzt ist, und der Durchgang ein Kugelelement trägt, das den Querschnittsabmessungen des Durchgangs entspricht.

## Revendications

1. Mécanisme d'entraînement permettant un mouvement relatif contrôlé entre deux organes (19, 15), le premier organe (19) étant supporté par l'autre organe (15) pour un mouvement relatif entre les deux organes (19,15), concentriquement autour d'un premier axe, **caractérisé en ce qu'**un organe d'entraînement (39, 55) est logé entre les deux organes (19, 15), l'organe d'entraînement (39, 55) étant capable de se déplacer par rapport aux deux organes susdits le long d'un second axe qui est transversal par rapport au trajet dudit mouvement relatif entre les organes, et parallèle au premier axe, l'organe d'entraînement (39, 55) étant mobile avec le premier organe le long du trajet du mouvement relatif, l'organe d'entraînement étant en prise avec l'autre organe (15) et coopérant avec l'autre organe (15), ce qui fait que, lors d'un mouvement de l'organe d'entraînement (39, 55) le long du second axe, les deux organes (19, 15) subissent ledit mouvement relatif.

2. Mécanisme d'entraînement selon la revendication 1, dans lequel le mécanisme d'entraînement comprend plusieurs organes d'entraînement (39).

3. Mécanisme d'entraînement selon la revendication 1 ou 2, dans lequel l'organe d'entraînement (39) est allongé, l'axe central de l'organe d'entraînement (39) étant parallèle à un troisième axe qui est décalé angulairement par rapport au second axe, l'organe d'entraînement (39) étant reçu dans un passage (35) dans l'autre organe (15).

4. Mécanisme d'entraînement selon la revendication 3, dans lequel le passage (35) est fourni par un organe (41) supporté à pivotement par l'autre organe (15).

5. Mécanisme d'entraînement selon la revendication 2, 3 ou 4, dans lequel le mécanisme d'entraînement comprend une plaque d'appui annulaire (29) mobile le long du second axe, un moyen d'entraînement configuré et agencé pour produire ledit déplacement, l'organe d'entraînement (39, 55) étant supporté par la plaque d'appui (29).

6. Mécanisme d'entraînement selon la revendication 5, dans lequel la plaque d'appui (29) supporte au moins une tige qui est reçue dans au moins un passage prévu dans le premier organe (19), les axes centraux et les passages étant parallèles au premier axe.

7. Mécanisme d'entraînement selon l'une quelconque des revendications 5 ou 7, dans lequel la plaque d'appui (29) est associée à une contre-plaque (24) qui ne peut tourner, mais peut se mouvoir axialement, parallèlement au second axe, à un palier de butée prévu entre la contre-plaque (24) et la plaque d'appui (29), à un moyen d'entraînement associé à la contre-plaque (24) pour produire ledit mouvement de la plaque d'appui (29)

8. Mécanisme d'entraînement selon la revendication 1, dans lequel les faces opposées de l'organe d'entraînement (55) et de l'autre organe (15) sont façonnées avec une paire de rainures opposées qui peuvent coopérer lorsqu'elles sont alignées pour définir un passage allongé, de section circulaire, ledit axe central du passage étant parallèle à un troisième axe qui est décalé angulairement par rapport au second axe, le passage supportant un organe en bille se conformant aux dimensions en section transversale du passage.
